# EUROPÄISCHE PATENTSCHRIFT

(11) **EP 0 460 782 B1**
(45) Veröffentlichungstag und Bekanntmachung des Hinweises auf die Patenterteilung: **31.08.1994**
(21) Anmeldenummer: 91250145.9
(22) Anmeldetag: 05.06.1991
(51) Int. Cl.: B60C 27/14

(54) **Gleitschutzvorrichtung**
Antislip device
Dispositif antidérapant

(30) Priorität: 06.06.1990 DE 4018415
(43) Veröffentlichungstag der Anmeldung: 11.12.1991
(73) Patentinhaber: RUD-Kettenfabrik Rieger & Dietz GmbH u. Co., D-73406 Aalen (DE)
(72) Erfinder: Zeiser, Peter Dipl.Ing., D-7080 Aalen-Wasseralfingen (DE)
(74) Vertreter: Böning, Manfred, Dr.-Ing.

(56) Entgegenhaltungen:
- DE-A- 2 400 870
- FR-A- 2 350 975

## Beschreibung

Die Erfindung betrifft eine Gleitschutzvorrichtung für Fahrzeugräder mit einer am Fahrzeugrad befestigbaren, gegenüber diesem drehbaren Halterung für mehrere speichenartig ausgebildete, ein geschlossenes Laufnetz aus einer Vielzahl beweglich miteinander verbundener Elemente haltende Haltearme, bei der die über Gelenke mit der Halterung verbundenen Haltearme im montierten Zustand der Gleitschutzvorrichtung mit ihren das Laufnetz haltenden Enden federnd gegen die Flanken des Fahrzeugrades anliegen (siehe DE-A-2 400 870).

Eine Gleitschutzvorrichtung der vorstehenden Art ist aus dem DE-GM 88 16 243.5 bekannt. Bei der bekannten Gleitschutzvorrichtung wird die montierte Halterung durch mindestens ein Spannteil zusammen mit den Haltearmen in Richtung der Achse des Fahrzeugrades gegen dieses gezogen. Der Spannteil dient dabei einerseits als Befestigungsorgan für die Haltevorrichtung am Fahrzeugrad und sichert andererseits die federnde Anlage der Enden der Haltearme an den Flanken des Fahrzeugreifens. Darüber hinaus liefert er die für die bei Gleitschutzvorrichtungen der in Betracht gezogenen Gattung automatisch erfolgende Restmontage erforderlichen axialen Spannkräfte. Um die vorstehende Mehrfachfunktion erfüllen zu können, muß der Spannteil als Zugfeder ausgebildet sein. Verwendet man wie im Falle der bekannten Gleitschutzvorrichtung aus Gründen des Bedienungskomforts nur eine Zugfeder als Spannteil, so können Unterbringungsprobleme auftreten, da die Zugfeder vergleichsweise große Abmessungen aufweist und zur Einleitung der Zugkräfte mit einem verhältnismäßig großen Griff oder Knebel versehen sein muß. Verwendet man wie bei einer aus der DE-OS 34 45 529 bekannten Gleitschutzvorrichtung mehrere Zugfedern, so ist die Bequemlichkeit der Montage beeinträchtigt. Bekannt ist schließlich aus der DE-OS 24 00 870 eine Gleitschutzvorrichtung mit an einer zentralen Halterung schwenkbar gelagerten Tragrohren, an deren äußeren Enden als Gleitschutzelemente dienende Federbügel angeordnet sind. Die Halterung dieser Vorrichtung läßt sich mittels eines als Kette ausgebildeten Anschlußstranges an dem Fahrzeugrad befestigen.

Der Erfindung liegt die Aufgabe zugrunde, eine Gleitschutzvorrichtung der in Betracht gezogenen Gattung derart auszugestalten, daß sie sich einerseits bequem am Fahrzeugrad befestigen läßt und andererseits eine sichere Verbindung zwischen ihr und dem Fahrzeugrad gewährleistet ist, ohne daß Probleme bei der Realisierung der für die automatisch erfolgende Restmontage der Gleitschutzvorrichtung erforderlichen axialen Spannkräfte auftreten. Diese Aufgabe wird erfindungsgemäß dadurch gelöst, daß die Haltearme sich im Abstand von den für sie vorgesehenen Gelenken über mindestens eine Druckfeder an der Halterung abstützen.

Die Halterung der erfindungsgemäßen Gleitschutzvorrichtung läßt sich in zeitlich aufeinanderfolgenden Schritten zunächst mit dem Fahrzeugrad verbinden, danach unter Überwindung der Kräfte der Druckfedern spannen und schließlich in der Betriebsstellung der Gleitschutzvorrichtung durch einen die Halterung mit dem Fahrzeugrad verbindenden Anschlußstrang axial arretieren. Beim Spannen drückt der Benutzer der Gleitschutzvorrichtung die Halterung zweckmäßigerweise mit einer Hand unter Überwindung der Kräfte der Druckfedern vom Körper weg gegen das Fahrzeugrad, während er mit der anderen Hand den Anschlußstrang hält, um sich gegebenenfalls an diesem abzustützen. Da der die Halterung unmittelbar oder mittelbar mit dem Fahrzeugrad verbindende Anschlußstrang keine Federfunktion zu erfüllen hat, treten bei seiner Auswahl weder Gestaltungs- noch Festigkeitsprobleme auf. Der Anschlußstrang dient lediglich als Mittel zur axialen Arretierung der Halterung in der Betriebsstellung der Gleitschutzvorrichtung.

Zweckmäßigerweise wird jedem Haltearm jeweils eine Druckfeder mit einer vorzugsweise progressiven Federkennlinie zugeordnet, wobei sich der Federweg leicht durch Anschläge an der Halterung begrenzen läßt. Die Verwendung mehrerer Druckfedern beeinträchtigt die Handhabung der Gleitschutzvorrichtung nicht, da die Druckfedern anders als bei der aus der DE-OS 35 45 529 bekannten Konstruktion mit mehreren Zugfedern nicht einzeln, sondern in ihrer Gesamtheit durch Ausüben eines Druckes auf die Halterung gespannt werden können. Als vorteilhaft erweist es sich zudem, daß z.B. bei Beschädigungen einer einzelnen Druckfeder die übrigen Druckfedern den Ausfall der beschädigten Feder weitgehend kompensieren. Eine mit Druckfedern einfacher als mit Zugfedern realisierbare progressive Federkennlinie bietet den Vorteil, daß in Fällen, in denen eine axiale Querkraft das Laufnetz der Gleitschutzvorrichtung vom Fahrzeugrad zu drängen sucht, also beispielsweise bei schneller Kurvenfahrt, die Federkraft mit zunehmendem Abdrängen ansteigt und das Laufnetz so auf der Lauffläche gehalten wird.

Ordnet man die Federn in der Nähe der Gelenke an, so lassen sich die Spannkräfte nicht nur leicht aufbringen, sondern es ist auch sichergestellt, daß sie über große von den das Laufnetz haltenden Enden der Haltearme bei der automatischen Restmontage zurückzulegende Wege wirksam sind und darüber hinaus im fertig montierten Zustand der Gleitschutzvorrichtung wirksam bleiben.

Weitere Einzelheiten und Merkmale der Erfindung ergeben sich aus der nachfolgenden Beschreibung der beigefügten Zeichnung. Es zeigen:
- Fig. 1: die perspektivische Ansicht einer mit einem Fahrzeugrad verbundenen Gleitschutzvorrichtung,
- Fig. 2: teilweise im Schnitt die Gleitschutzvorrichtung gemäß Fig. 1,
- Fig. 3: einen Schnitt durch eine von einem Elastomer gebildete Druckfeder mit progressiver Kennlinie,
- Fig. 4: einen Schnitt längs der Linie IV-IV in Fig. 3,
- Fig. 5: einen Schnitt durch eine aus Federstahldraht hergestellte konische Druckfeder mit progressiver Kennlinie,
- Fig. 6: in vergrößertem Maßstab die Vorderansicht einer Halterung mit einer modifizierten Anschlußstrangarretierung,
- Fig. 7: einen Schnitt durch die Halterung gemäß Fig. 6,
- Fig. 8: teilweise im Schnitt die Teilvorderansicht einer Halterung mit einem von einem Seil gebildeten Anschlußstrang und
- Fig. 9: einen Schnitt durch die Halterung gemäß Fig. 8.

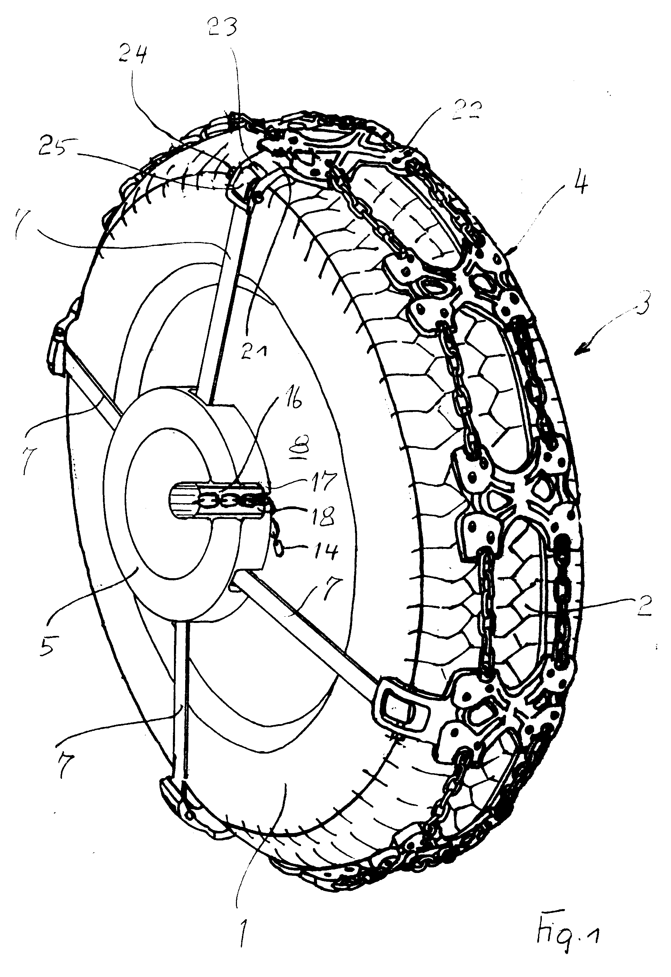

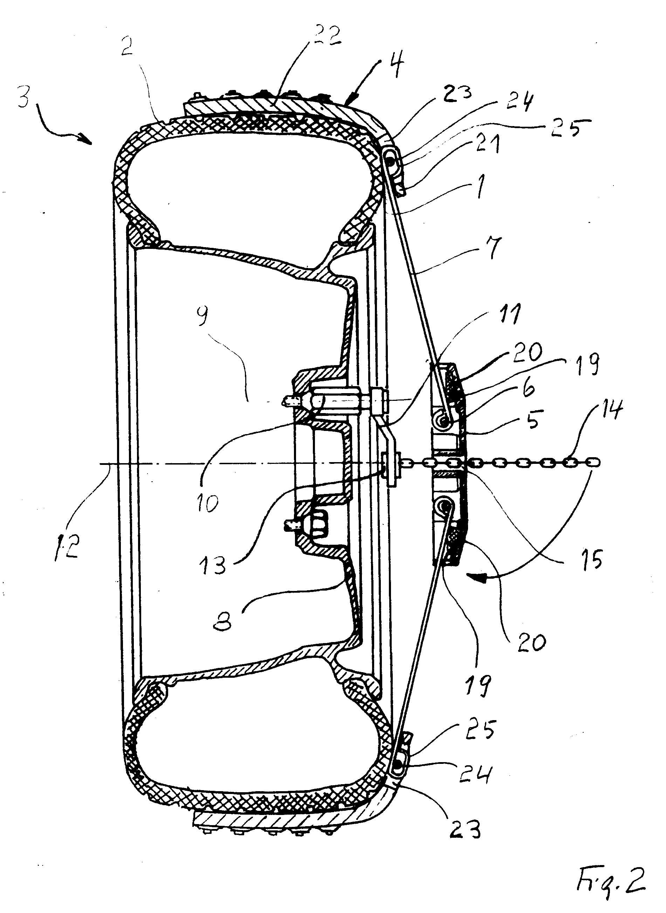

In den Figuren 1 und 2 sind 1 die Flanke und 2 die Lauffläche des Reifens eines Fahrzeugrades 3, auf das eine Gleitschutzvorrichtung mit einem Laufnetz 4 montiert ist. Die Gleitschutzvorrichtung weist eine Halterung 5 auf, an der mittels Gelenke 6 bildender Schwenkzapfen vier Haltearme 7 derart schwenkbar gelagert sind, daß sie sich zur Reduzierung des für ihre Aufbewahrung benötigten Stauraumes ähnlich wie die Streben eines Schirmes zusammenklappen lassen.

Zur Befestigung der Gleitschutzvorrichtung an der Felge 8 des Fahrzeugrades 3 dient eine Befestigungsvorrichtung mit einem um die Achse 9 eines Befestigungselementes 10 drehbaren Anschlußteil 11. Das Anschlußteil 11 ist als einarmiger Hebel ausgebildet, dessen freies Ende ein in eine mit der Achse 12 des Fahrzeugrades 3 fluchtende Lage überführbares Lager für ein drehbares Verankerungselement 13 für einen Anschlußstrang 14 formt. Der Anschlußstrang 14 passiert eine zentrale Öffnung 15 der Halterung und läßt sich in einen Führungskanal 16 schwenken, an dessen Ende nockenförmige Rastorgane 17,18 zur Arretierung des Anschlußstranges 14 angeordnet sind.

Im Bereich der Peripherie der Halterung 5 ist diese mit Taschen 19 zur Aufnahme von Druckfedern 20 aus einem Elastomer versehen. Die Form der Druckfedern 20 ist so gewählt, daß man eine progressive Federkennlinie erhält. Die Druckfedern 20 legen sich in unmittelbarer Nähe der Gelenke 6 gegen die aus geraden Bandstahlabschnitten hergestellten Haltearme 7 an und drücken das Laufnetz 4 auf die Lauffläche 2. Die fertigungstechnisch günstige gerade Form der Haltearme gestattet es nicht nur, den Abstand zwischen der Halterung 5 und der Radnabe klein zu halten, sondern sie reduziert auch den Raumbedarf beim Verstauen der nicht benutzten Gleitschutzvorrichtung.

Die Verbindung des vorzugsweise in seiner Länge veränderbaren Laufnetzes 4 mit den Haltearmen 7 erfolgt über Vorsprünge 21 von Laufnetzteilen 22. Die Vorsprünge 21 sind mit Fenstern 23 versehen, die Schwenkzapfen 24 aufweisen. Die Schwenkzapfen 24 werden von langlochartig ausgebildeten Ösen 25 umfaßt, welche von in die Fenster 23 greifenden, eingerollten Enden der Haltearme 7 gebildet werden. Durch die langlochartige Ausbildung der Ösen 25 wird Walkbewegungen des Fahrzeugreifens Rechnung getragen.

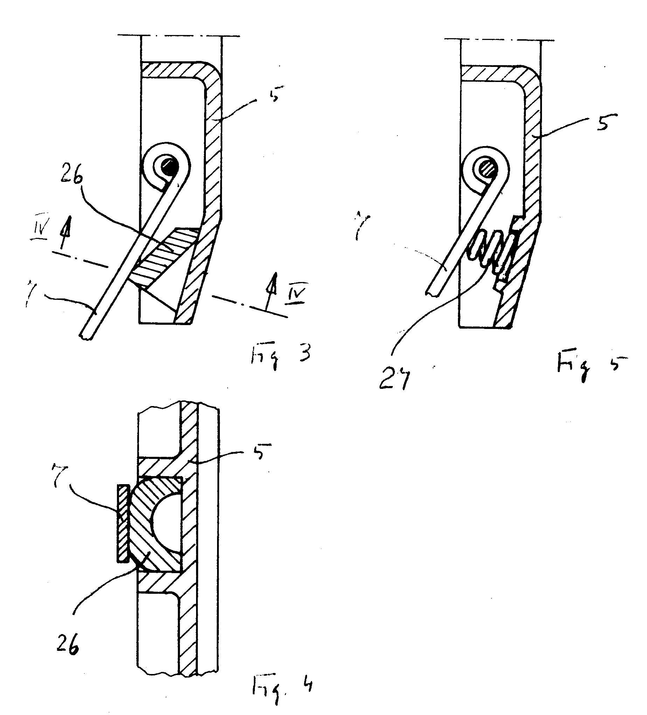

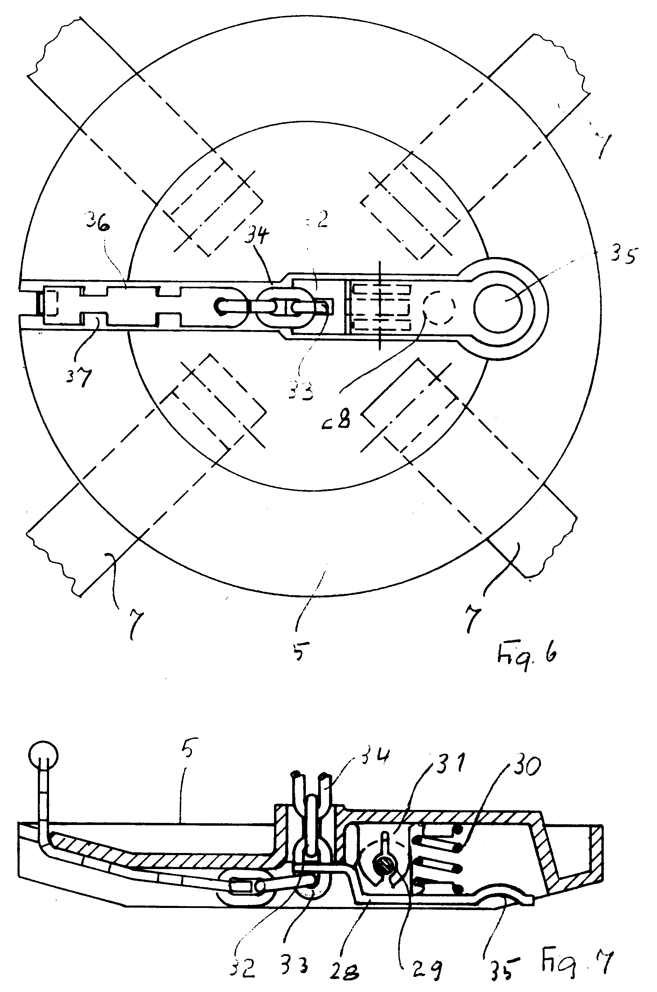

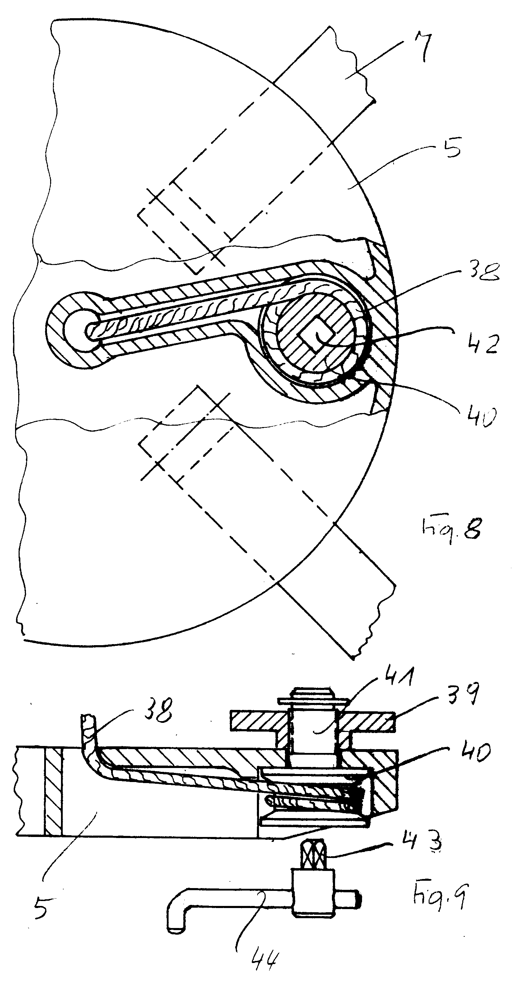

Zwei Ausführungsbeispiele von Druckfedern 26 und 27 mit progressiver Kennlinie sind in den Figuren 3 bis 5 dargestellt. Die Druckfeder 26 besteht aus einem Elastomer, die Druckfeder 27 aus Federstahl. In beiden Fällen läßt sich die Progressivität der Kennlinie durch die jeweilige Formgebung der Druckfedern einfach realisieren.

Anstelle der nockenförmigen Rastorgane 17,18 kann zur Arretierung des Anschlußstranges 14 auch eine Sperrklinke 28 verwendet werden, wie dies in den Figuren 6 und 7 dargestellt ist. Die Sperrklinke 28 ist um eine Achse 29 gegen die Kraft einer Rückstellfeder 30 schwenkbar in einem Bock 31 gelagert. Ein Ende der Sperrklinke 28 bildet eine Gabel 32 zur Arretierung eines Gliedes 33 des Anschlußstranges 34, während das andere Ende eine Drucktaste 35 formt. In das letzte Glied des Anschlußstranges 34 ist ein Ende eines flachen, flexiblen Bandabschnittes 36 eingehängt. Der Bandabschnitt 36 weist lediglich zu seiner Verwahrung dienende Rastkerben 37 auf. Durch den Bandabschnitt 36 wird erreicht, daß die Arretierung des Anschlußstranges 24 erst wirksam werden kann, wenn Kettenglieder in den Bereich der Gabel 32 gelangen. Die Handhabung des Anschlußstranges ist denkbar einfach. Die Gleitschutzvorrichtung wird während der Montage gegen das Fahrzeugrad 3 gedrückt, indem der Benutzer mit einer Hand einen entsprechenden Druck auf die Halterung 5 ausübt. Dabei verbleibt die Halterung 5 in der gewünschten Lage, und der Anschlußstrang kann in die Arretierungsposition gezogen werden. Beim Ziehen ist lediglich die außerordentlich geringe Kraft der Rückstellfeder 30 zu überwinden. Statt des fest mit dem letzten Glied der den Anschlußstrang 34 bildenden Kette verbundenen Bandabschnittes 36, der in der Halterung 5 verwahrt werden muß, könnte man auch einen lösbaren Hilfsstrang verwenden, der nach Arretierung eines Gliedes des Anschlußstranges von diesem getrennt und gesondert aufbewahrt wird.

Einen von einem Seil gebildeten Anschlußstrang 38 zeigen die Figuren 8 und 9. Zum Arretieren und Verwahren des Anschlußstranges 38 dient eine durch eine Klemmutter 34 festklemmbare Rolle 40 mit einem Gewindezapfen 41 für die Klemmutter 39. Die Rolle kann mit einem Vierkantloch 42 für den Vierkantzapfen 43 einer Kurbel 44 versehen werden, um das Aufwickeln des Anschlußstranges 38 zu erleichtern und diesen gegebenenfalls sogar als Spannorgan zu nutzen.

## Patentansprüche

1. Gleitschutzvorrichtung für Fahrzeugräder mit einer am Fahrzeugrad (3) befestigbaren, gegenüber diesem drehbaren Halterung (5) für mehrere speichenartig ausgebildete, ein geschlossenes Laufnetz (4) aus einer Vielzahl beweglich miteinander verbundener Elemente haltende Haltearme (7), bei der die über Gelenke (6) mit der Halterung (5) verbundenen Haltearme (7) im montierten Zustand der Gleitschutzvorrichtung mit ihren das Laufnetz (4) haltenden Enden federnd gegen die Flanken des Fahrzeugrades (3) anliegen, dadurch **gekennzeichnet**, daß die Haltearme (7) sich im Abstand von den für sie vorgesehenen Gelenken (6) über mindestens eine Druckfeder (20,26,27) an der Halterung (5) abstützen.

2. Gleitschutzvorrichtung nach Anspruch 1, dadurch gekennzeichnet, daß die Druckfeder (20,26,27) in der Nähe der Gelenke (6) für die Haltearme (7) angeordnet ist.

3. Gleitschutzvorrichtung nach Anspruch 1 oder 2, dadurch gekennzeichnet, daß die Druckfeder (20,26,27) eine progressive Federkennlinie hat.

4. Gleitschutzvorrichtung nach einem der Ansprüche 1 bis 3, dadurch gekennzeichnet, daß jedem Haltearm (7) jeweils eine Druckfeder (20,26,27) zugeordnet ist.

5. Gleitschutzvorrichtung nach einem der Ansprüche 1 bis 4, dadurch gekennzeichnet, daß der Federweg jeder Druckfeder (20,26,27) ausreichend groß ist, um einen mit einem Haltearm (7) verbundenen Laufnetzabschnitt aus einer neben dem Fahrzeugrad (3) gelegenen Position auf dessen Lauffläche zu überführen.

6. Gleitschutzvorrichtung nach einem der Ansprüche 1 bis 5, dadurch gekennzeichnet, daß die Druckfeder bzw. Druckfedern (20,26,27) als die vom Fahrzeugrad (3) weggerichtete Schwenkbewegung der Haltearme (7) um ihre Gelenke (6) begrenzende Anschlagpuffer ausgebildet ist bzw. sind.

7. Gleitschutzvorrichtung nach einem der Ansprüche 1 bis 6, dadurch gekennzeichnet, daß die Druckfeder bzw. Druckfedern (20,26,27) gegen einen zwischen den Gelenken (6) und den das Laufnetz (4) tragenden Enden der Haltearme (7) gelegenen Abschnitt der Haltearme (7) zur Anlage kommt bzw. kommen.

8. Gleitschutzvorrichtung nach einem der Ansprüche 1 bis 7, dadurch gekennzeichnet, daß die Haltearme (7) federelastisch sind.

9. Gleitschutzvorrichtung nach einem der Ansprüche 1 bis 8, dadurch gekennzeichnet, daß die Haltearme (7) von geraden Bandstahlabschnitten gebildet werden.

10. Gleitschutzvorrichtung nach einem der Ansprüche 1 bis 9, dadurch gekennzeichnet, daß die dem Laufnetz zugewandten Enden der Haltearme (7) zu langlochartig ausgebildeten Ösen (25) für Schwenkzapfen (24) eingerollt sind.

11. Gleitschutzvorrichtung nach einem der Ansprüche 1 bis 10, dadurch gekennzeichnet, daß die Druckfeder bzw. Druckfedern (20,26) aus einem kälteunempfindlichen Elastomer besteht bzw. bestehen.

12. Gleitschutzvorrichtung nach einem der Ansprüche 1 bis 11, dadurch gekennzeichnet, daß das Zentrum der Halterung (5) mit einer Öffnung (15) für einen Anschlußstrang (14,34,38) versehen ist, der die Halterung (5) mit einem am Fahrzeugrad (3) befestigten Anschlußteil (11) verbindet.

13. Gleitschutzvorrichtung nach Anspruch 12, dadurch gekennzeichnet, daß der Anschlußstrang (14,34,38) über ein drehbares Verankerungselement (13) mit dem Anschlußteil (11) verbunden ist.

14. Gleitschutzvorrichtung nach Anspruch 12 oder 13, dadurch gekennzeichnet, daß mindestens ein Teil des Anschlußstranges (14,34) als Kette ausgebildet ist.

15. Gleitschutzvorrichtung nach einem der Ansprüche 12 bis 14, dadurch gekennzeichnet, daß der Anschlußstrang aus zwei Abschnitten (34,36) besteht.

16. Gleitschutzvorrichtung nach Anspruch 15, dadurch gekennzeichnet, daß die Abschnitte des Anschlußstranges lösbar miteinander verbunden sind.

17. Gleitschutzvorrichtung nach Anspruch 12 oder 13, dadurch gekennzeichnet, daß der Anschlußstrang (38) von einem Seil gebildet wird.

18. Gleitschutzvorrichtung nach einem der Ansprüche 12 bis 17, dadurch gekennzeichnet, daß der Anschlußstrang (14,34,38) in der Anschlußstellung durch mindestens ein Lagesicherungsorgan (17,18,28,39) arretierbar ist.

19. Gleitschutzvorrichtung nach Anspruch 18, dadurch gekennzeichnet, daß das Lagesicherungsorgan von einer Sperrklinke (28) gebildet wird.

20. Gleitschutzvorrichtung nach Anspruche 18 oder 19, dadurch gekennzeichnet, daß das Lagesicherungsorgan von einer Klemmutter (39) gebildet wird.

## Claims

1. Anti-skidding device for vehicle wheels, having a holding device (5) which can be fixed on the vehicle wheel (3) and can be rotated relative to the latter, for a plurality of retention arms (7), which are of spoke-like design and hold a continuous interlinked tread arrangement (4) made of a multiplicity of elements which are connected movably to one another, in which, in the mounted condition of the anti-skidding device the retention arms (7), connected via hinges (6) to the holding device (5) bear with their ends, which hold the inter]inked tread arrangement (4), resiliently against the flanks of the vehicle wheel (3), characterized in that the retention arms (7) are supported on the holding device (5) at a distance from the hinges (6) provided for them via at least one compression spring (20, 26, 27).

2. Anti-skidding device according to Claim 1, characterized in that the compression spring (20, 26, 27) is arranged in the vicinity of the hinges (6) for the retention arms (7).

3. Anti-skidding device according to Claim 1 or 2, characterized in that the compression sprang (20, 26, 27) has a progressive spring characteristic.

4. Anti-skidding device according to one of Claims 1 to 3, characterized in that in each case one compression spring (20, 26, 27) is assigned to each retention arm (7).

5. Anti-skidding device according to one of Claims 1 to 4, characterized in that the spring travel of each compression spring (20, 26, 27) is sufficiently large to transfer a section of the interlinked tread arrangement connected to a retention arm (7) from a position situated next to the vehicle wheel (3) to the tread surface thereof.

6. Anti-skidding device according to one of Claims 1 to 5, characterized in that the compression spring or compression springs (20, 26, 27) is or are designed as a stop buffer which limits the pivoting movement of the retention arms (7) around their hinges (6) away from the vehicle wheel (3).

7. Anti-skidding device according to one of Claims 1 to 6, characterized in that the compression spring or compression springs (20, 26, 27) comes or come to rest against a section of the retention arms (7), which section is situated between the hinges (6) and those ends of the retention arms (7) which carry the interlinked tread arrangement (4).

8. Anti-skidding device according to one of Claims 1 to 7, characterized in that the retention arms (7) are spring-elastic.

9. Anti-skidding device according to one of Claims 1 to 8, characterized in that the retention arms (7) are formed by straight sections of strip steel.

10. Anti-skidding device according to one of Claims 1 to 9, characterized in that those ends of the retention arms (7) which face the interlinked tread arrangement are rolled round to give slot-like eyes (25) for pivoting pins (24).

11. Anti-skidding device according to one of Claims 1 to 10, characterized in that the compression spring or compression springs (20, 26) is or are composed of an elastomer which is insensitive to low temperatures.

12. Anti-skidding device according to one of Claims 1 to 11, characterized in that the centre of the holding device (5) is provided with an opening (15) for a connecting line (14, 34, 38) which connects the holding device (5) to a connecting part (11) fixed on the vehicle wheel (3).

13. Anti-skidding device according to Claim 12, characterized in that the connecting line (14, 34, 38) is connected via a rotatable anchoring element (13) to the connecting part (11).

14. Anti-skidding device according to Claim 12 or 13, characterized in that at least part of the connecting line (14, 34) is designed as a chain.

15. Anti-skidding device according to one of Claims 12 to 14, characterized in that the connecting line is composed of two sections (34, 36).

16. Anti-skidding device according to Claim 15, characterized in that the sections of the connecting line are releasably connected to each other.

17. Anti-skidding device according to Claim 12 or 13, characterized in that the connecting line (38) is formed by a cable.

18. Anti-skidding device according to one of Claims 12 to 17, characterized in that the connecting line (14, 34, 38) can be locked in the connecting position by at least one position-securing member (17, 18, 28, 39).

19. Anti-skidding device according to claim 18, characterized in that the position-securing member is formed by a latch (28).

20. Anti-skidding device according to Claim 18 or 19, characterized in that the position-securing member is formed by a clamping nut (39).

## Revendications

1. Dispositif antidérapant pour roues de véhicule (3) comportant une attache (5) fixée sur la roue et orientable par rapport à celle-ci pour plusieurs bras de retenue (7) en forme de croisillon et supportant une armature de roulement réticulée et fermée (4), composée de nombreux éléments mobiles et solidaires entre eux, dans lequel, à l'état monté du dispositif antidérapant les bras de retenue (7 reliés à l'attache (5) par les articulations (6) sont appliqués avec leurs extrémités supportant l'armature de roulement réticulée (4), par élasticité, contre les flancs de la roue du véhicule (3) caractérisé en ce que les bras de retenue (7) prennent appui contre l'attache (5) via au moins un ressort de compression (20,26) (27) à distance des articulations (6) prévues pour eux.

2. Dispositif antidérapant selon la revendication 1, caractérisé en ce que le ressort de compression (20, 26, 27) est placé à proximité des articulations (6) pour les bras de retenue (7)

3. Dispositif antidérapant selon l'une des revendications 1 ou 2; caractérisé en ce que le ressort de compression (20,26,27a) présente une courbe caractéristique d'élasticité progressive.

4. Dispositif antidérapant selon l'une des revendications 1 à 3; caractérisé en ce que chacun des bras de retenue (7)comporte un ressort de compression (20, 26, 27).

5. Dispositif antidérapant selon l'une des revendications 1 à 4; caractérisé en ce que la course de chaque ressort de compression (20, 26, 27) est suffisamment longue pour transférer un tronçon de l'armature de roulement réticulée solidaire de l'un des bras de retenue (7), d'une position située à côté de la roue du véhicule (3), sur la surface de roulement decelle-ci.

6. Dispositif antidérapant selon l'une des revendications 1 à (5); caractérisé en ce que le ou les ressorts de compression (20, 26, 27) est/sont conçu(s) en tant que butée(s)élastique(s) limitant le mouvement d'oscillation des bras de retenue (7) et de leurs articulations (6), à partir de la roue du véhicule (3).

7. Dispositif antidérapant selon l'une des revendications 1 à 6; caractérisé en ce que le ou les ressorts de compression (20, 26, 27) vient/viennent en butée contre une longueur des bras de retenue (7) comprise entre les articulations (6) et les extrémités des bras de retenue (7) supportant l'armature de roulement réticulée (4).

8. Dispositif antidérapant selon l'une des revendications 1 à 7; caractérisé en ce que les bras de retenue (7) sont élastiques.

9. Dispositif antidérapant selon l'une des revendications 1 à 8; caractérisé en ce que les bras de retenue (7) sont formés de bandes rectilignes en acier.

10. Dispositif antidérapant selon l'une des revendications 1 à 9; caractérisé en ce que les extrémités des bras de retenue (7), orientées vers l'armature de roulement réticulée, sont enroulées en forme d'oeillets oblongs 25 pour recevoir les tenons pivotants (24).

11. Dispositif antidérapant selon l'une des revendications 1 à 10; caractérisé en ce que le ou les ressorts de compression (20, 26) est/sont fabriqués en un élastomère résistant aux basses températures.

12. Dispositif antidérapant selon l'une des revendications 1 à 11, caractérisé en ce que le centre de l'attache (5) comporte une ouverture (15) pour un cordon d'assemblage (14, 34, 38) qui relie l'attache (5)à une pièce de raccordement (11) fixée sur la roue du véhicule (3).

13. Dispositif antidéparapant selon la revendication 12, caractérisé en ce que le cordon d'assemblage (14,34,38) est relié à la pièce d'assemblage (11) au moyen d'un élément d'ancrage pivotant (13).

14. Dispositif antidéparapant selon la revendication 12 ou 13, caractérisé en ce qu'une partie au moins du cordon d'assemblage (14,34) est formée en tant que chaîne.

15. Dispositif antidérapant selon les revendications 12 à 14, caractérisé en ce que le cordon d'assemblage est constitué de deux sections (34,36).

16. Dispositif antidérapant selon la revendication 15, caractérisé en ce que les sections du cordon d'assemblage sont reliées les unes aux autres de manière détachable.

17. Dispositif antidérapant selon la revendication 12 ou 13 caractérisé en ce que le cordon d'assemblage (38) est formé d'un câble.

18. Dispositif antidérapant selon l'une des revendications 12 à 17, caractérisé en ce que le cordon d'assemblage (14,34,38) peut être arrêté en position de raccordement par au moins un organe de sécurité de position.

19. Dispositif antidérapant selon la revendication 18 caractérisé en ce que l'organe de sécurité de position est formé d'un cliquet d'arrêt (28).

20. Dispositif antidérapant selon la revendication 18 ou 19, caractérisé en ce que l'organe de sécurité de position est formé d'un écrou de serrage (39).
